# DEMANDE DE BREVET EUROPEEN

(11) **EP 0 693 364 A1**
(43) Date de publication de la demande: **24.01.1996**
(21) Numéro de dépôt: 95401702.6
(22) Date de dépôt: 18.07.1995
(51) Int. Cl.: B29D 30/66, B29C 70/70

(54) **Procédé de fabrication de pneumatiques et pneumatiques obtenus par ledit procédé**

(30) Priorité: 20.07.1994 FR 9408977
(71) Demandeur: HUTCHINSON S.A., F-75008 Paris (FR)
(72) Inventeur: Gangloff, Norbert, F-45270 Ladon (FR)
(74) Mandataire: Hurwic, Aleksander

(57) **Abrégé**

L'invention a principalement pour objet un procédé de fabrication d'un pneumatique comprenant une étape de réalisation d'une carcasse, caractérisé en ce qu'il comporte les étapes consistant à réaliser une structure laminaire comprenant une première bande (1) en élastomère, notamment en caoutchouc, un film séparateur (3) n'adhérant pas à l'élastomère lors d'une étape de vulcanisation, et une deuxième bande (2) en élastomère, notamment en caoutchouc, à enfoncer dans la première bande (1) sur une face principale (5) opposée à celle portant le film séparateur (3) des embases (6) dans lesquelles sont fixés de manière amovible des clous (7) pour pneumatiques cloutés, à déposer la structure laminaire munie des embases (6) de clous (7) sur la carcasse (8) d'un pneumatique, à déposer la carcasse (8) munie de la structure laminaire dans un moule, à vulcaniser la carcasse munie de la structure laminaire, à démouler l'ensemble vulcanisé, à enlever la deuxième bande (2) en élastomère et le film séparateur (3), de manière à faire apparaître les clous (7) dépassant de la première bande (1) en élastomère.

## Description

La présente invention se rapporte à un procédé de fabrication de pneumatiques ainsi qu'aux pneumatiques obtenus par ledit procédé.

Les véhicules motorisés, notamment les automobiles et les motocyclettes, sont amenés à circuler non seulement sur route mais également, notamment lors de compétitions sportives, sur pistes et sur glace. Les performances obtenues lors d'une telle compétition dépendent principalement de l'habileté du pilote ainsi que de l'adhérence des pneumatiques au terrain, que l'on peut améliorer en munissant le pneumatique de clous dépassant de la surface de roulement en caoutchouc. Le cloutage des pneumatiques est habituellement une opération artisanale postérieure à la fabrication du pneumatique. De plus, les clous une fois mis en place ne peuvent pas être facilement remplacés par des clous mieux adaptés à la surface de la piste ou à la réglementation en vigueur se rapportant à un type de course particulier.

C'est par conséquent un but de la présente invention d'offrir un procédé de fabrication en série de pneumatiques cloutés.

C'est également un but de la présente invention d'offrir un procédé permettant d'obtenir des pneumatiques cloutés à un prix de revient modéré.

C'est aussi un but de la présente invention d'offrir des pneumatiques comportant des embases de montage de clous susceptibles de recevoir des clous adaptés à la surface de la piste, au type de pilotage désiré et/ou à la réglementation en vigueur.

Ces buts sont atteints selon l'invention par un procédé de dépose sur la carcasse du pneumatique d'une structure laminaire comprenant une pluralité de bandes d'élastomère, notamment de caoutchouc, munies d'embases équipées de clous. L'épaisseur totale des bandes d'élastomère est inférieure à la hauteur de l'embase munie d'un clou. Le complexe comporte en outre un film séparateur avantageusement au niveau de la face externe de l'embase.

L'invention a principalement pour objet un procédé de fabrication d'un pneumatique comprenant une étape de réalisation d'une carcasse, caractérisé en ce qu'il comporte les étapes consistant à :
a) réaliser une structure laminaire comprenant une première bande en élastomère, notamment en caoutchouc, un film séparateur n'adhérant pas à l'élastomère lors d'une étape de vulcanisation, et une deuxième bande en élastomère, notamment en caoutchouc ;
b) enfoncer dans la première bande sur une face principale opposée à celle portant le film séparateur des embases dans lesquelles sont fixés de manière amovible des clous pour pneumatiques cloutés ;
c) déposer la structure laminaire munie des embases de clous sur la carcasse d'un pneumatique, la face principale dans laquelle l'on a enfoncé les embases étant dirigée vers la carcasse ;
d) déposer la carcasse munie de la structure laminaire dans un moule ;
e) vulcaniser la carcasse munie de la structure laminaire ;
f) démouler l'ensemble vulcanisé ;
g) enlever la deuxième bande en élastomère et le film séparateur, de manière à faire apparaître les clous dépassant de la première bande en élastomère.

L'invention a également pour objet un procédé de fabrication d'un pneumatique comprenant une étape de réalisation d'une carcasse, caractérisé en ce qu'il comporte les étapes consistant à :
a) réaliser une structure laminaire comprenant une première bande en élastomère, notamment en caoutchouc, un film séparateur n'adhérant pas à l'élastomère lors d'une étape de vulcanisation, et une deuxième bande en élastomère, notamment en caoutchouc ;
b) enfoncer dans la première bande sur une face principale opposée à celle portant le film séparateur des clous pour pneumatiques cloutés ;
c) déposer la structure laminaire munie des clous sur la carcasse d'un pneumatique, la face principale dans laquelle l'on a enfoncé les clous étant dirigée vers la carcasse ;
d) déposer la carcasse munie de la structure laminaire dans un moule ;
e) vulcaniser la carcasse munie de la structure laminaire ;
f) démouler l'ensemble vulcanisé ;
g) enlever la deuxième bande en élastomère et le film séparateur, de manière à faire apparaître les clous dépassant de la première bande en élastomère.

L'invention a également pour objet un procédé, caractérisé en ce qu'aux étapes d) et e), l'on met en oeuvre un moule lisse.

L'invention a également pour objet un procédé, caractérisé en ce que chaque embase d'un clou comporte un taraudage, et en ce que chaque clou comporte un filetage correspondant.

L'invention a également pour objet un procédé, caractérisé en ce que les ouvertures des taraudages des embases de clous affleurent la surface de roulement du pneumatique formée par la face principale de la première bande en élastomère disposée du côté du film séparateur.

L'invention a également pour objet un procédé, caractérisé en ce que les embases des clous sont des écrous à griffes.

L'invention a également pour objet un pneumatique clouté, caractérisé en ce qu'il est réalisé par un procédé selon l'invention.

L'invention a également pour objet un pneumatique, caractérisé en ce que ledit pneumatique est un pneumatique de motos.

L'invention a également pour objet un pneumatique, caractérisé en ce que ledit pneumatique est un pneumatique de véhicules automobiles.

L'invention sera mieux comprise au moyen de la description ci-après et des figures annexées données comme des exemples non limitatifs et sur lesquelles :
- la figure 1 est une vue en perspective d'une structure laminaire susceptible d'être mise en oeuvre dans le procédé selon la présente invention ;
- la figure 2 est une vue en coupe de la structure laminaire de la figure 1 munie d'embases cloutées ;
- la figure 3 est une vue analogue de la structure laminaire de la figure 2 déposée sur une carcasse de pneumatique ;
- la figure 4 est une vue analogue d'un pneumatique obtenu par le procédé selon la présente invention.

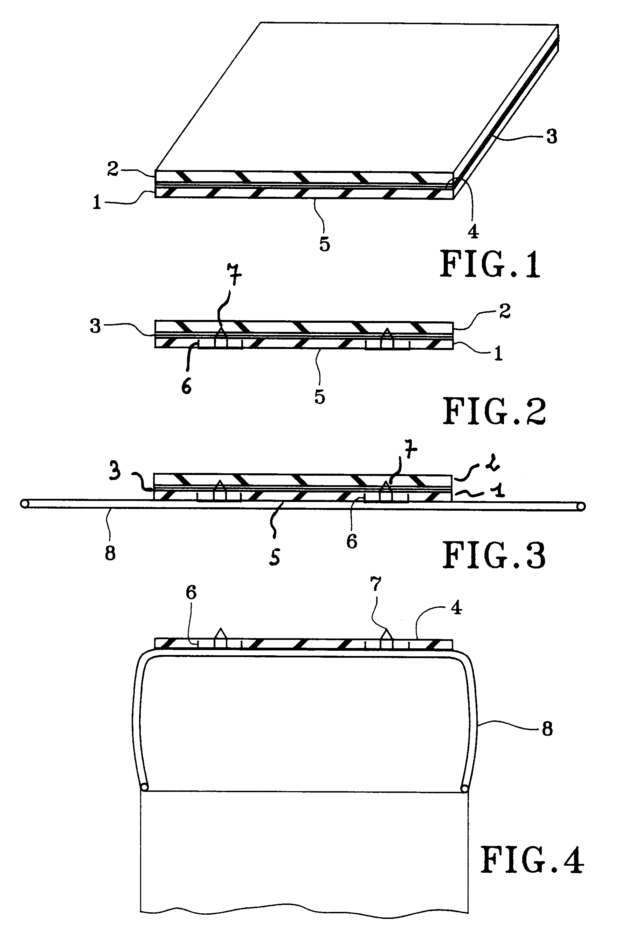

Sur les figures 1 à 4, on a utilisé les mêmes références pour désigner les mêmes éléments.

Sur la figure 1, on peut voir une structure laminaire comportant une première bande 1 en élastomère, de préférence en caoutchouc susceptible de former, après vulcanisation, la bande de roulement d'un pneumatique, et une deuxième bande 2 en élastomère, de préférence en caoutchouc, entre lesquelles est disposé un film séparateur 3. Le film séparateur 3 est réalisé en une matière n'adhérant pas au caoutchouc lors de sa vulcanisation, comme par exemple du PTFE ou, avantageusement, le produit vendu sous la Marque Cellophane. Le film peut aussi bien être déposé en forme de feuille ou réalisé par projection sur l'une des bandes. La première bande 1 comporte une première face principale 4, dirigée vers la deuxième bande 2 et une seconde face principale 5, opposée à la première face principale 4.

Comme on peut le voir sur la figure 2, on enfonce des embases 6 munies de clous 7 sur la deuxième face principale 5 de la bande 1. Avantageusement, les embases comportent des moyens permettant le montage et le démontage de divers types de clous, de préférence un taraudage. On a par exemple utilisé avec succès des embases 6 formées par des écrous à griffes habituellement utilisés en menuiserie pour assurer l'assemblage d'éléments en bois. Avantageusement, I'épaisseur de la première bande 1 est sensiblement égale à la hauteur des embases 6, de manière à ce que les ouvertures des taraudages débouchent sur la première face principale 4.

Comme on peut le voir sur la figure 3, la structure laminaire, munie des ensembles formés par les embases 6 et les clous 7, est déposée sur une carcasse 8 du pneumatique à réaliser. L'ensemble mis en forme est disposé dans un moule lisse et est vulcanisé, par exemple, par la chaleur. La deuxième bande 2 protège la surface du moule qui, autrement, serait rayée par les clous 7 et simultanément exerce une pression sur la face 4 de la première bande 1 permettant une vulcanisation correcte.

On démoule le pneumatique, on enlève le film séparateur 3 et la deuxième bande 2 mettant à nu la première face principale 4 de la première bande 1 formant la surface de roulement du pneumatique sur laquelle apparaissent les clous 7.

Le changement éventuel des clous 7 s'effectue en dévissant les clous 7 en place, ce qui fait apparaître les ouvertures des taraudages des embases 6 dans lesquels on visse les clous désirés. Ainsi, on dispose de toutes les configurations de clous désirées avec un nombre réduit de pneumatiques.

La présente invention s'applique notamment à la réalisation de pneumatiques pour véhicules tout terrain et/ou pour conduite sur glace.

La présente invention s'applique principalement aux pneumatiques pour véhicules automobiles et motocyclettes de compétition.

## Revendications

1. Procédé de fabrication d'un pneumatique comprenant une étape de réalisation d'une carcasse, caractérisé en ce qu'il comporte les étapes consistant à :
a) réaliser une structure laminaire comprenant une première bande (1) en élastomère, notamment en caoutchouc, un film séparateur (3) n'adhérant pas à l'élastomère lors d'une étape de vulcanisation, et une deuxième bande (2) en élastomère, notamment en caoutchouc ;
b) enfoncer dans la première bande (1) sur une face principale (5) opposée à celle portant le film séparateur (3) des embases (6) dans lesquelles sont fixés de manière amovible des clous (7) pour pneumatiques cloutés ;
c) déposer la structure laminaire munie des embases (6) de clous (7) sur la carcasse (8) d'un pneumatique, la face principale (5) dans laquelle l'on a enfoncé les embases (6) étant dirigée vers la carcasse (8) ;
d) déposer la carcasse (8) munie de la structure laminaire dans un moule ;
e) vulcaniser la carcasse munie de la structure laminaire ;
f) démouler l'ensemble vulcanisé ;
g) enlever la deuxième bande (2) en élastomère et le film séparateur (3), de manière à faire apparaître les clous (7) dépassant de la première bande (1) en élastomère.

2. Procédé de fabrication d'un pneumatique comprenant une étape de réalisation d'une carcasse, caractérisé en ce qu'il comporte les étapes consistant à :
a) réaliser une structure laminaire comprenant une première bande (1) en élastomère, notamment en caoutchouc, un film séparateur n'adhérant pas à l'élastomère lors d'une étape de vulcanisation, et une deuxième bande (2) en élastomère, notamment en caoutchouc ;
b) enfoncer dans la première bande (1) sur une face principale (5) opposée à celle portant le film séparateur (3) des clous pour pneumatiques cloutés ;
c) déposer la structure laminaire munie des clous (7) sur la carcasse (8) d'un pneumatique, la face principale (5) dans laquelle l'on a enfoncé les clous (7) étant dirigée vers la carcasse (8) ;
d) déposer la carcasse munie de la structure laminaire dans un moule ;
e) vulcaniser la carcasse munie de la structure laminaire ;
f) démouler l'ensemble vulcanisé ;
g) enlever la deuxième bande (2) en élastomère et le film séparateur (3), de manière à faire apparaître les clous (7) dépassant de la première bande (1) en élastomère.

3. Procédé selon la revendication 1 ou 2, caractérisé en ce qu'aux étapes d) et e), l'on met en oeuvre un moule lisse.

4. Procédé selon la revendication 1 ou 3, caractérisé en ce que chaque embase (6) d'un clou (7) comporte un taraudage, et en ce que chaque clou (7) comporte un filetage correspondant.

5. Procédé selon la revendication 4, caractérisé en ce que les ouvertures des taraudages des embases (6) de clous (7) affleurent la surface de roulement (4) du pneumatique formée par la face principale de la première bande (1) en élastomère disposée du côté du film séparateur (3).

6. Procédé selon l'une quelconque des revendications 1, 3, 4, 5, caractérisé en ce que les embases (6) des clous (7) sont des écrous à griffes.

7. Pneumatique clouté, caractérisé en ce qu'il est réalisé par un procédé selon l'une quelconque des revendications précédentes.

8. Pneumatique selon la revendication 7, caractérisé en ce que ledit pneumatique est un pneumatique de motos.

9. Pneumatique selon la revendication 7, caractérisé en ce que ledit pneumatique est un pneumatique de véhicules automobiles.
